# EUROPÄISCHE PATENTSCHRIFT

(11) **EP 2 412 050 B1**
(45) Veröffentlichungstag und Bekanntmachung des Hinweises auf die Patenterteilung: **30.10.2013**
(21) Anmeldenummer: 10716456.8
(22) Anmeldetag: 26.02.2010
(51) Int. Cl.: H01M 8/02

(54) **KONTAKTELEMENT FÜR EINE ELEKTRISCH LEITENDE VERBINDUNG ZWISCHEN EINER ANODE UND EINEM INTERKONNEKTOR EINER HOCHTEMPERATURBRENNSTOFFZELLE**
CONTACT ELEMENT FOR AN ELECTRICALLY CONDUCTIVE CONNECTION BETWEEN AN ANODE AND AN INTERCONNECTOR OF A HIGH-TEMPERATURE FUEL CELL
ÉLÉMENT DE CONTACT POUR UNE CONNEXION ÉLECTRIQUEMENT CONDUCTRICE ENTRE UNE ANODE ET UN INTERCONNECTEUR D'UNE PILE À COMBUSTIBLE À HAUTE TEMPÉRATURE

(30) Priorität: 26.03.2009 DE 102009015794
(43) Veröffentlichungstag der Anmeldung: 01.02.2012
(73) Patentinhaber: Fraunhofer-Gesellschaft zur Förderung der angewandten Forschung e.V., 80686 München (DE)
(72) Erfinder: WAESCHKE, Ulf, 01099 Dresden (DE); KUSNEZOFF, Mihails, 01309 Dresden (DE)
(74) Vertreter: Pfenning, Meinig & Partner GbR
(86) Internationale Anmeldenummer: PCT/DE2010/000236
(87) Internationale Veröffentlichungsnummer: WO 2010/108466

(56) Entgegenhaltungen:
- WO-A2-2005/122300
- WO-A2-2006/082057
- US-A1- 2007 003 819

## Beschreibung

Die Erfindung betrifft ein Kontaktelement für eine elektrisch leitende Verbindung zwischen einer Anode und einem Interkonnektor einer Hochtemperaturbrennstoffzelle. Bei Hochtemperaturbrennstoffzellen ist es üblich einzelne Brennstoffzellen zu Stapeln zusammen zu fassen und diese dabei elektrisch leitend miteinander zu verbinden. Hierfür werden zwischen den Elektroden von einzelnen Brennstoffzellen Interkonnektoren, die auch als Bipolare-Platten bezeichnet werden, angeordnet. Der elektrische Strom kann so von einer Elektrode einer Brennstoffzelle zur entgegengesetzt gepolten Elektrode der nächstfolgenden Brennstoffzelle fließen.

Da es aber erforderlich ist, dass Brennstoff oder Oxidationsmittel zu den Elektroden gelangen kann, ist eine Permeabilität oder Durchlässigkeit dafür erforderlich, was die elektrische Leitfähigkeit beeinflusst.

So wurden bisher unterschiedlich konfigurierte Stromkollektoren zwischen den Elektroden und den jeweiligen zugeordneten Interkonnektoren eingesetzt. Beispiele dafür sind Netzwerke oder Stromkollektoren, die mit Fasern gebildet sind (DE 102 32 093 A1).

Ein weiteres generell bei Hochtemperaturbrennstoffzellen zu berücksichtigendes Problem ist die Wärmeausdehnung, wegen der hohen Betriebstemperatur der Brennstoffzellen. Aus diesem Grunde werden üblicherweise für alle wesentlichen einzelnen Elemente der Brennstoffzelle, also die Werkstoffe für die Elektroden, Interkonnektoren und teilweise auch der Stromkollektoren, so ausgewählt, dass der thermische Ausdehnungskoeffizient des Festelektrolyten berücksichtigt ist. Es sollen dabei nur geringe Abweichungen zugelassen werden.

Die Stromkollektoren, die die elektrisch leitende Verbindung zwischen einer Anode und einem dieser zugeordneten Interkonnektor werden üblicherweise aus Nickel hergestellt. Nickel hat aber einen deutlich größeren thermischen Ausdehnungskoeffizienten. Bei Abkühlung einer Hochtemperaturbrennstoffzelle von der Betriebs- auf Raumtemperatur bildet sich bei der Anodenkontaktierung ein Längendefizit aus. Dies führt dazu, dass eine keramische Kontaktierung der Kathode mit Zugspannungen beaufschlagt wird und dort die Kontaktierung abreißen kann. Dadurch entstehen elektrische Verluste und die erreichbare Leistung wird reduziert.

Eine Reduzierung der Dicke einer so mit Nickel ausgebildeten elektrisch leitenden Verbindung zwischen Anode und dem Interkonnektor ist auch nicht zielführend, da mit der Duktilität des Nickels auch mechanische Spannungen und Fertigungstoleranzen ausgeglichen werden müssen.

Bei einer Ausbildung der Kontaktierung zwischen Anode und Interkonnektor mit Netzen oder Fasergebilden tritt während des Betriebes von Brennstoffzellen auch eine lokal differenzierte Verformung auf, die dazu führt, dass punktuell Bereiche mit erhöhter elektrischer Leitfähigkeit auftreten, die als "Hotspots" bezeichnet werden. Dort fließt der größte Teil des elektrischen Stromes.

Kommt es dabei dazu, dass an diesen Positionen die Kontaktierung gestört wird, ergibt es sich zwangsläufig, dass die elektrische Leitfähigkeit reduziert und der elektrische Widerstand erhöht werden. Dies wirkt sich besonders nachteilig beim wieder Anfahren einer vorab abgeschalteten Brennstoffzelle aus, da zumindest während dieser Zeit kein solcher Kontakt an einem so ausgebildeten Stromkollektor vorhanden ist, über den lokal so begrenzt ein großer elektrischer Strom zwischen Anode und dem Interkonnektor fließen kann.

Es ist daher Aufgabe der Erfindung, eine zuverlässigere langzeitstabile elektrisch leitende Verbindung zwischen einer Anode und dem zugeordneten Interkonnektor einer Hochtemperaturbrennstoffzelle zu erreichen.

Erfindungsgemäß wird diese Aufgabe mit einem Kontaktelement, das die Merkmale des Anspruchs 1 aufweist, gelöst. Vorteilhafte Ausgestaltungen und Weiterbildungen der Erfindung können mit in untergeordneten Ansprüchen bezeichneten technischen Merkmalen erreicht werden.

Ein erfindungsgemäßes Kontaktelement ist mit zwei flächigen elektrisch leitenden Teilelementen gebildet. Dabei steht jeweils ein Teilelement mit der Anode in berührendem Kontakt und das andere Teilelement mit dem jeweiligen Interkonnektor in berührendem Kontakt. In den Teilelementen sind Durchbrechungen ausgebildet, über die Brennstoff durch das Kontaktelement hindurch treten kann und das Kontaktelement dafür durchlässig ist. Beide Teilelemente sind aus Werkstoffen mit jeweils voneinander abweichendem thermischen Ausdehnungskoeffizienten gebildet.

Die Teilelemente und damit auch das gesamte Kontaktelement können auch porös sein.

Ein Kontaktelement kann auch aus mehr als zwei Teilelementen gebildet sein. Dabei sollten die thermischen Ausdehungskoeffizienten analog berücksichtigt sein.

Durch die unterschiedlichen thermischen Ausdehnungskoeffizienten der Teilelemente treten bei einer Temperaturveränderung Verformungen auf. Dadurch können mit im Kontaktelement induzierten Druckspannungen elektrisch leitende Kontakte stabilisiert werden. Diese sind über die Fläche des Kontaktelementes verteilt. Dadurch kann elektrischer Strom entsprechend mehr lokal verteilt über die zur Verfügung stehende Fläche zwischen Anode und dem Interkonnektor fließen.

Bei der Verformung können Berge und Täler am Kontaktelement ausgebildet werden, die über die Fläche verteilt angeordnet werden. Täler treten dabei bevorzugt an Positionen von Durchbrechungen auf. So kann bei einer Abkühlung von der Betriebstemperatur einer Hochtemperaturbrennstoffzelle die auftretende Deformation des Kontaktelementes ausgenutzt werden, indem durch die Verformung Bereiche an die Anode und Bereiche an den Interkonnektor angepresst werden. Dadurch kann der elektrische Kontakt verbessert werden.

Dieser Effekt kann bei jedem weiteren Temperaturwechsel erneut ausgenutzt werden.

Die thermischen Ausdehnungskoeffizienten der Werkstoffe aus denen die beiden Teilelemente gebildet sind, sollten so weit auseinander liegen, dass die die Differenz der Ausdehnung mindestens 1 ppm/K beträgt. Dies sollte zumindest im Temperaturbereich zwischen 700 °C und der Betriebstemperatur von Hochtemperaturbrennstoffzellen eingehalten sein.

Die in den Teilelementen ausgebildeten Durchbrechungen sollten so angeordnet sein, dass das Kontaktelement für Brennstoff durchlässig ist und die jeweiligen Durchbrechungen an einem Teilelement mit jeweils einer Durchbrechung des anderen Teilelementes miteinander kommunizieren.

Bei der Auswahl der Werkstoffe für die Teilelemente und bei deren Dimensionierung kann berücksichtigt werden, dass die beiden Teilelemente bei einer Temperatur, die mindestens 100 K kleiner als die Betriebs-temperatur der Hochtemperatur-Brennstoffzelle ist, gleich groß sind oder gleich groß sein können.

Die Teilelemente können vorteilhaft bzgl. der Form und Größe ihrer Fläche, so dimensioniert sein, dass sie bei einer Temperatur, die mindestens 100 K kleiner als die Betriebstemperatur der Hochtemperatur-Brennstoffzelle ist, mit ihren äußeren Rändern an einem umlaufend ausgebildeten Randelement anliegen. Dies kann aber bereits normaler Raumtemperatur der Fall sein.

Die Teilelemente des Kontaktelementes können aber auch allein oder zusätzlich zu den vorab gemachten Angaben mit ihren äußeren Rändern umlaufend mit einem Randelement fixiert und/oder zumindest an ihren äußeren Rändern miteinander verbunden sein.

Mit diesen Maßnahmen kann bei Temperaturwechseln die vorteilhaft mit der Erfindung nutzbare Verformung über die Fläche des Kontaktelementes erreicht werden.

Das erfindungsgemäße Kontaktelement sollte flexibel verformbar und gasdurchlässig sein, hierfür können die Teilelemente mit flexibel verformbaren, perforierten Folien gebildet sein.

Die Teilelemente können dabei jeweils aus einem unterschiedlichen Metall oder einer Legierung davon, das ausgewählt ist aus Ni, Cu, Fe und Co gebildet sein.

Die Gesamtdicke eines Kontaktelementes sollte maximal 2 mm betragen.

Die beiden Teilelemente eines erfindungsgemäßen Kontaktelementes können eine unterschiedliche Dicke aufweisen. Dabei können der jeweilige thermische Ausdehnungskoeffizient, die mechanischen Eigenschaften (z.B. die Duktilität) und auch die jeweilige elektrische Leitfähigkeit berücksichtigt werden.

Die Durchbrechungen der Teilelemente sollten 20 bis 90 %, bevorzugt 40 bis 60 % der Fläche der Anodenund/oder Interkonnektorfläche ausmachen, um zu gewährleisten, dass ein ausreichender Brennstoffaustausch erfolgen und die elektrische Leitfähigkeit hoch gehalten werden kann.

Die Durchbrechungen sollten regelmäßig, äquidistant zueinander angeordnet und jeweils gleich dimensioniert und konturiert sein, wobei dies zumindest auf den zentralen Bereich zutreffen sollte. Der äußere Rand kann ggf. davon abweichend oder ganz frei von Durchbrechungen sein kann.

Ein Teilelement mit dem größeren thermischen Ausdehnungskoeffizienten sollte an der der Anode zugewandten und das Teilelement mit dem kleineren thermischen Ausdehungskoeffizienten an der dem Interkonnektor zugewandten Seite des Kontaktelements angeordnet sein.

Nachfolgend soll die Erfindung beispielhaft näher erläutert werden.
Dabei zeigen:
Figur 1 eine Schnittdarstellung durch eine Hochtemperaturbrennstoffzelle mit einem erfindungsgemäßen Kontaktelement und

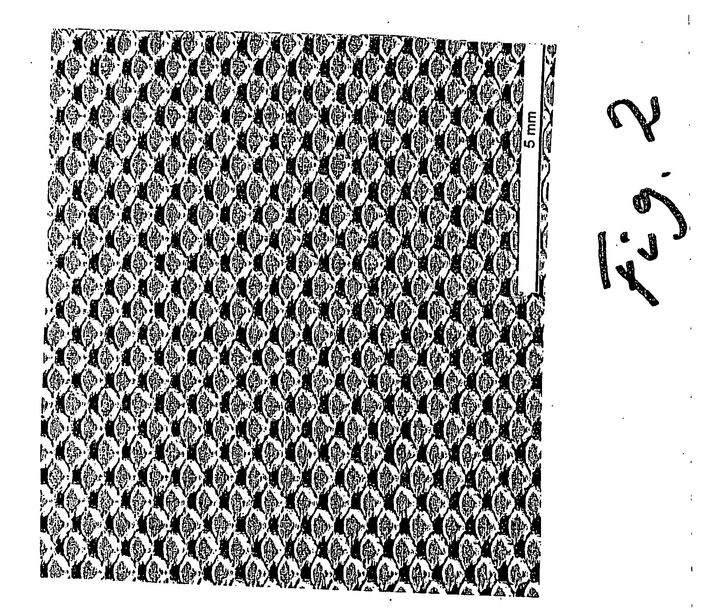

Figur 2 eine Ansicht auf ein Teilelement eines Beispiels eines erfindungsgemäßen Kontaktelementes.

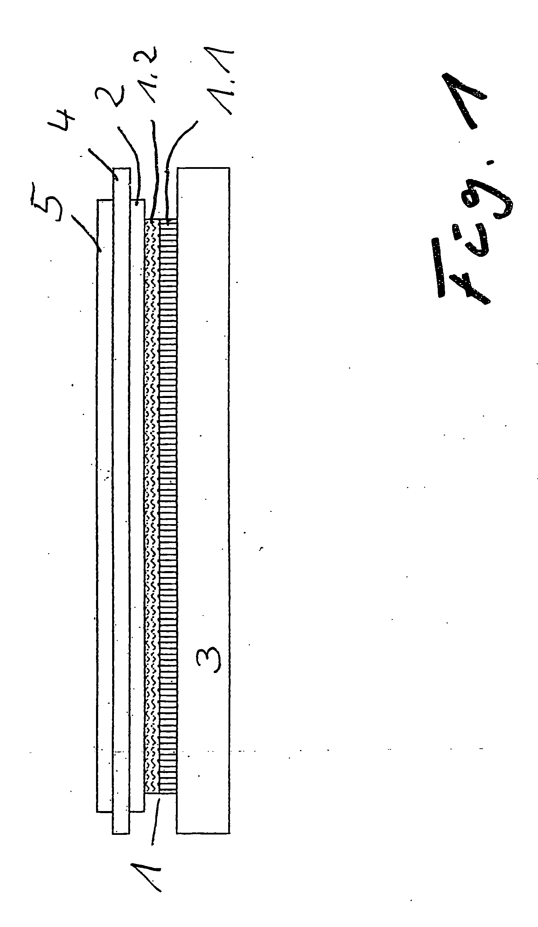

In Figur 1 ist im Schnitt eine Hochtemperaturbrennstoffzelle gezeigt. Dabei ist ein Kontaktelement 1 auf einem Interkonnektor 3, zwischen diesem und der Anode 2 angeordnet. Oberhalb der Anode 2 sind der Festelektrolyt 4 und eine Kathode 5 vorhanden.

Das Kontaktelement 1 ist hier mit zwei Folien, als die beiden Teilelemente 1.1 und 1.2 gebildet. Dabei ist das interkonnektorseitig angeordnete Teilelement 1.1 aus reinem Kupfer (α = 16,5 * 10⁻³ K⁻¹ bei 20 °C) gebildet und es weist eine Dicke von 290 µm auf. Das zweite an der Anodenseite angeordnete Teilelement 1.2 ist mit einer 120 µm dicken Folie aus reinem Nickel (α = 13,0 * 10⁻³ K⁻¹ bei 20 °C) gebildet.

## Patentansprüche

1. Kontaktelement für eine elektrisch leitende Verbindung zwischen einer Anode und einem Interkonnektor einer Hochtemperaturbrennstoffzelle, das zwischen der Anode und einem Interkonnektor angeordnet ist,
**dadurch gekennzeichnet, dass**
das Kontaktelement (1) mit zwei flächigen elektrisch leitenden Teilelementen (1.1 und 1.2) gebildet ist und jeweils ein Teilelement (1.1) mit der Anode (2) in berührendem Kontakt und das andere Teilelement (1.2) mit dem jeweiligen Interkonnektor (3) in berührendem Kontakt steht; dabei in den Teilelementen (1.1 und 1.2) Durchbrechungen ausgebildet und
die Teilelemente (1.1 und 1.2) aus Werkstoffen mit voneinander abweichendem thermischen Ausdehnungskoeffizient gebildet sind, wobei eine Differenz der Ausdehnung von mindestens 1 ppm/K im Temperaturbereich zwischen 700 °C und der Betriebstemperatur von Hochtemperaturbrennstoffzellen eingehalten ist.

2. Kontaktelement nach Anspruch 1, **dadurch gekennzeichnet, dass** die in den Teilelementen (1.1 und 1.2) ausgebildeten Durchbrechungen so angeordnet sind, dass das Kontaktelement (1) für Brennstoff - durchlässig ist.

3. Kontaktelement nach Anspruch 1 oder 2, **dadurch gekennzeichnet, dass** die Teilelemente (1.1 und 1.2) bei einer Temperatur, die mindestens 100 K kleiner als die Betriebstemperatur der Hochtemperatur-Brennstoffzelle ist, gleich groß sind.

4. Kontaktelement nach einem der vorhergehenden Ansprüche, **dadurch gekennzeichnet, dass** die Teilelemente (1.1 und 1.2) bei einer Temperatur, die mindestens 100 K kleiner als die Betriebstemperatur der Hochtemperatur-Brennstoffzelle ist, mit ihren äußeren Rändern an einem umlaufend ausgebildeten Randelement anliegen.

5. Kontaktelement nach einem der vorhergehenden Ansprüche, **dadurch gekennzeichnet, dass** die Teilelemente (1.1 und 1.2) des Kontaktelementes (1) mit ihren äußeren Rändern umlaufend mit einem Randelement fixiert und/oder zumindest an ihren äußeren Rändern miteinander verbunden sind.

6. Kontaktelement nach einem der vorhergehenden Ansprüche, **dadurch gekennzeichnet, dass** das Kontaktelement (1) flexibel verformbar ist.

7. Kontaktelement nach einem der vorhergehenden Ansprüche, **dadurch gekennzeichnet, dass** die Teilelemente (1.1 und 1.2) flexibel verformbare, perforierte Folien sind.

8. Kontaktelement nach einem der vorhergehenden Ansprüche, **dadurch gekennzeichnet, dass** die Teilelemente (1.1 und 1.2) aus einem Metall, das ausgewählt ist aus Ni, Cu, Fe und Co oder einer Legierung eines dieser Metalle gebildet sind.

9. Kontaktelement nach einem der vorhergehenden Ansprüche, **dadurch gekennzeichnet, dass** die Teilelemente (1.1) und (1.2) eine unterschiedliche Dicke aufweisen.

10. Kontaktelement nach einem der vorhergehenden Ansprüche, **dadurch gekennzeichnet, dass** die Durchbrechungen der Teilelemente (1.1 und 1.2) 20 bis 90 %, der Fläche der Anoden- und/oder Interkonnektorfläche ausmachen.

11. Kontaktelement nach einem der vorhergehenden Ansprüche, **dadurch gekennzeichnet, dass** die Durchbrechungen regelmäßig, äquidistant zueinander angeordnet und jeweils gleich dimensioniert und konturiert sind.

12. Kontaktelement nach einem der vorhergehenden Ansprüche, **dadurch gekennzeichnet, dass** das an der Anodenseite angeordnete Teilelement (1.2) einen größeren thermischen Ausdehnungskoeffizienten aufweist, als das an der dem Interkonnektor (3) zugewandten Seite angeordnete Teilelement (1.1).

## Claims

1. A contact element for an electrically conductive connection between an anode and an interconnector of a high-temperature fuel cell, which element is arranged between the anode and an interconnector,
**characterised in that**
the contact element (1) is formed with two two-dimensional electrically conductive partial elements (1.1 and 1.2), and in each case one partial element (1.1) is in touching contact with the anode (2) and the other partial element (1.2) is in touching contact with the respective interconnector (3);
apertures are formed in the partial elements (1.1 and 1.2) and
the partial elements (1.1 and 1.2) are formed from materials with thermal coefficients of expansion which differ from each other, a difference of the expansion of at least 1 ppm/K being maintained in a temperature range between 700°C and the operating temperature of high-temperature fuel cells.

2. A contact element according to Claim 1, **characterised in that** the apertures formed in the partial elements (1.1 and 1.2) are arranged such that the contact element (1) is permeable to fuel.

3. A contact element according to Claim 1 or 2, **characterised in that** the partial elements (1.1 and 1.2) are of equal size at a temperature which is at least 100 K lower than the operating temperature of the high-temperature fuel cell.

4. A contact element according to one of the preceding claims, **characterised in that** the partial elements (1.1 and 1.2), at a temperature which is at least 100 K lower than the operating temperature of the high-temperature fuel cell, lie with their outer edges against a peripherally formed edge element.

5. A contact element according to one of the preceding claims, **characterised in that** the partial elements (1.1 and 1.2) of the contact element (1) with their outer edges are fixed peripherally to an edge element and/or at least are joined together at their outer edges.

6. A contact element according to one of the preceding claims, **characterised in that** the contact element (1) is flexibly deformable.

7. A contact element according to one of the preceding claims, **characterised in that** the partial elements (1.1 and 1.2) are flexibly deformable, perforated films.

8. A contact element according to one of the preceding claims, **characterised in that** the partial elements (1.1 and 1.2) are formed from a metal which is selected from Ni, Cu, Fe and Co or an alloy of one of these metals.

9. A contact element according to one of the preceding claims, **characterised in that** the partial elements (1.1) and (1.2) are of different thicknesses.

10. A contact element according to one of the preceding claims, **characterised in that** the apertures of the partial elements (1.1 and 1.2) make up 20 to 90% of the surface of the anode surface and/or interconnector surface.

11. A contact element according to one of the preceding claims, **characterised in that** the apertures are arranged regularly, equidistant to one another, and in each case are identically dimensioned and contoured.

12. A contact element according to one of the preceding claims, **characterised in that** the partial element (1.2) arranged on the anode side has a greater thermal coefficient of expansion than the partial element (1.1) arranged on the side facing the interconnector (3).

## Revendications

1. Elément de contact pour une liaison électroconductrice entre une anode et un interconnecteur d'une pile à combustible à haute température, qui est disposé entre l'anode un interconnecteur,
**caractérisé en ce que**
l'élément de contact (1) est formé de deux élément partiels (1.1 et 1.2) plats et électro-conducteurs et respectivement un élément partiel (1.1) est en contact direct avec l'anode (2) et l'autre élément partiel (1.2) est en contact direct avec l'interconnecteur (3) respectif ; des perforations sont réalisées dans les éléments partiels (1.1 et 1.2) et
les éléments partiels (1.1 et 1.2) sont formés de matériaux avec des coefficients de dilatation thermique différents les uns des autres, une différence de dilatation d'au moins 1 ppm/K étant respectée dans une plage de température entre 700 °C et la température de service des piles à combustible à haute température.

2. Elément de contact selon la revendication 1, **caractérisé en ce que** les perforations réalisées dans les éléments partiels (1.1 et 1.2) sont disposées de sorte que l'élément de contact (1) est perméable au combustible.

3. Elément de contact selon la revendication 1 ou 2, **caractérisé en ce que** les éléments partiels (1.1 et 1.2) présentent des tailles identiques à une température qui est d'au moins 100 K inférieure à la température de service de la pile à combustible à haute température.

4. Elément de contact selon l'une quelconque des revendications précédentes, **caractérisé en ce que**, à une température qui est d'au moins 100 K inférieure à la température de la pile à combustible à haute température, les éléments partiels (1.1 et 1.2) s'appuient, avec leurs bords externes, contre un élément de bordure de forme circulaire.

5. Elément de contact selon l'une quelconque des revendications précédentes, **caractérisé en ce que** les éléments partiels (1.1 et 1.2) de l'élément de contact (1) sont fixés, avec leurs bords externes de manière circulaire à un élément de bordure et/ou sont reliés ensemble au moins au niveau de leurs bords externes.

6. Elément de contact selon l'une quelconque des revendications précédentes, **caractérisé en ce que** l'élément de contact (1) est déformable de manière flexible.

7. Elément de contact selon l'une quelconque des revendications précédentes, **caractérisé en ce que** les éléments partiels (1.1 et 1.2) sont des films flexibles déformables perforés.

8. Elément de contact selon l'une quelconque des revendications précédentes, **caractérisé en ce que** les éléments partiels (1.1 et 1.2) sont formés à partir d'un métal choisi parmi les éléments Ni, Cu, Fe et Co ou d'un alliage d'un de ces métaux.

9. Elément de contact selon l'une quelconque des revendications précédentes, **caractérisé en ce que** les éléments partiels (1.1 et 1.2) présentent des épaisseurs différentes.

10. Elément de contact selon l'une quelconque des revendications précédentes, **caractérisé en ce que** les perforations des éléments partiels (1.1 et 1.2) représentent de 20 à 90% de la surface de l'anode et/ou de l'interconnecteur.

11. Elément de contact selon l'une quelconque des revendications précédentes, **caractérisé en ce que** les perforations sont disposées régulièrement, à équidistance les unes des autres et présentent les mêmes dimensions et contours.

12. Elément de contact selon l'une quelconque des revendications précédentes, **caractérisé en ce que** l'élément partiel (1.2) disposé du côté de l'anode présente un coefficient de dilatation thermique plus important que celui de l'élément partiel (1.1) disposé du côté orienté vers l'interconnecteur (3).
